(19) Europäisches Patentamt
European Patent Office
Office européen des brevets

(11) **EP 3 144 693 A1**

(12) **EUROPEAN PATENT APPLICATION**

(43) Date of publication:
**22.03.2017 Bulletin 2017/12**

(51) Int Cl.:
*G01S 5/02* *(2010.01)*     *H04W 64/00* *(2009.01)*
*H04B 17/318* *(2015.01)*     *H04B 7/06* *(2006.01)*
*H04B 7/04* *(2017.01)*

(21) Application number: **15306413.4**

(22) Date of filing: **15.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALCATEL LUCENT**
**92100 Boulogne-Billancourt (FR)**

(72) Inventors:
• **KUCERA, Stepan**
  **Dublin (IE)**

• **DASHTI, Marzieh**
  **Dublin (IE)**

(74) Representative: **Berthier, Karine et al**
  **Alcatel-Lucent International**
  **148/152, route de la Reine**
  **92100 Boulogne-Billancourt (FR)**

Remarks:
Amended claims in accordance with Rule 137(2) EPC.

(54) **METHOD, USER EQUIPMENT AND COMPUTER READABLE MEDIUM TO DETERMINE AN RF FINGERPRINT**

(57) Method, user equipment and computer readable medium to determine a RF fingerprint of a signal transmitted by a base station and received by a user equipment is described. The method comprises a step 101 of determining a first information representative of a power of the signal. The said step 101 of determination is also configured to determine a second information representative of precoding preferences of the user equipment for a MIMO reception of the signal.

**Fig. 1**   101 — ⌐ Determination of a first and second information ⌐

EP 3 144 693 A1

**Description**

FIELD OF INVENTION

The present subject matter relates to the determination of a Radio-Frequency (RF) finger print. The present subject matter can for example be used to determine an RF fingerprint map or determine the location of a user equipment based on the determined RF fingerprint and a predetermined RF fingerprint MAP. The subject matter can for example be used to determine RF fingerprint between a user equipment and base stations of a cellule network, for example an LTE network.

BACKGROUND

Accurate localization of mobile user is one of the key features in wireless networks. Indeed, major applications for mobile network user rely on the information of countless user position. For example car navigation and control, traffic monitoring, virtual reality/context overlay, fleet/device management, etc. Moreover, operators could also be legally obliged to accurately track emergency calls (so-called "Enhanced 911").

From and industrial perspective, consistently reliable localization and tracking capability helps infrastructure providers and operators maximize the network performance by facilitating traffic hotspot identification for efficient small-cell placement (coverage optimization). For example, simulations show that minor offsets of small-cell coverage with respect to the hotspot location can be tolerably compensated by antenna adaptation, but major small-cell misplacement seriously degrades the cell capacity and user throughput. Dynamic mobility and traffic monitoring can be also used for optimized resource management and mobility robustness (self)-optimization.

Localization based on GPS satellite measurements is very accurate but costly (additional hardware, synchronization requirements, battery drain) and ineffective indoors and in urban canyons. Multi-path propagation and practical synchronization limitations render inaccurate techniques based on time-of-arrival and angle-of-arrival measurements. Localization based on cell identity limits the accuracy to the cell "diameter".

The man having ordinary skills in the art known localization based on RF fingerprinting is the best compromise in terms of implementation/deployment/operation complexity and performance. Herein, user signal-strength measurements are online compared with data in a geo-localized measurement database, collected in a previous offline phase. However, basic RF fingerprints on their own may not be able to provide the accuracy required in some use cases.

The man having ordinary skills in the art also known solutions based on the deployment of the so-called dummy base stations. These dummy base stations are used to identify potential hotspot areas as well as their coverage by recording handover requests (rejected by default). Apart of the inconvenience of double deployment, dummy base stations can only capture the handover requests. This information is however not sufficient for evaluating the user mobility conditions. For example, a passing by user may simply trigger the handover request without actually intending to hand over. This is an important drawback because small cells should primarily offload static users. Secondly, an effort is needed to download the recorded information from the dummy base-station and post-process it. Finally, in addition to pilot pollution caused by potentially high number of such dummy base-stations, they must be configured to have a correct cell identity; otherwise a cell identity confusion/collision may occur.

SUMMARY

This summary is provided to introduce concepts related to the determination of RF fingerprints.

In one implementation, a method to determine a RF fingerprint of a signal transmitted by a base station and received by a user equipment is described. The method comprises a step 101 of determining a first information representative of a power of the signal. The said step 101 of determination is also configured to determine a second information representative of precoding preferences of the user equipment for a MIMO reception of the signal.

In another implementation, a user equipment is described. The user equipment comprises reception means and one or more processor(s) and a memory coupled to the processor(s). The reception means is configured to receive a signal transmitted by a base station. The processor is configured to determine a first information representative of a power of the signal, and to determine a second information representative of precoding preferences of the user equipment for a MIMO reception of the signal.

In another implementation a computer-readable medium is described. The computer-readable medium has embedded thereon a method to determine of a RF fingerprint of a signal transmitted by a base station and received by a user equipment. The method comprises a step 101 of determining a first information representative of a power of the signal. The said step 101 of determination is also configured to determine a second information representative of precoding preferences of the user equipment for a MIMO reception of the signal.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents a first embodiment of the system object of the present subject matter.

Figure 2 presents a second embodiment of the system object of the present subject matter.

Figure 3 presents another illustration of the second embodiment of the system object of the present subject matter.

Figure 4-a and 4-b presents a two illustrations of a third embodiment of the system object of the present subject matter.

Figure 5 presents example of PMI fingerprint clusters derived from the PMI fingerprint database.

Figure 6 presents a schematic illustration of fingerprint diversity in estimated UE area.

Figure 7 presents a schematic illustration of fingerprint diversity in along estimated UE mobility trajectory.

Figure 8 presents example of PMI variations as function of UE mobility from a base station in a direction perpendicular/aligned to the UE trajectory.

Figures 9-a to 9-d present four antenna patterns having spatially distinct main lobes.

Figure 10 presents cumulative probability density function of the minimum angular distance between two locations characterized by different precoding preferences.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

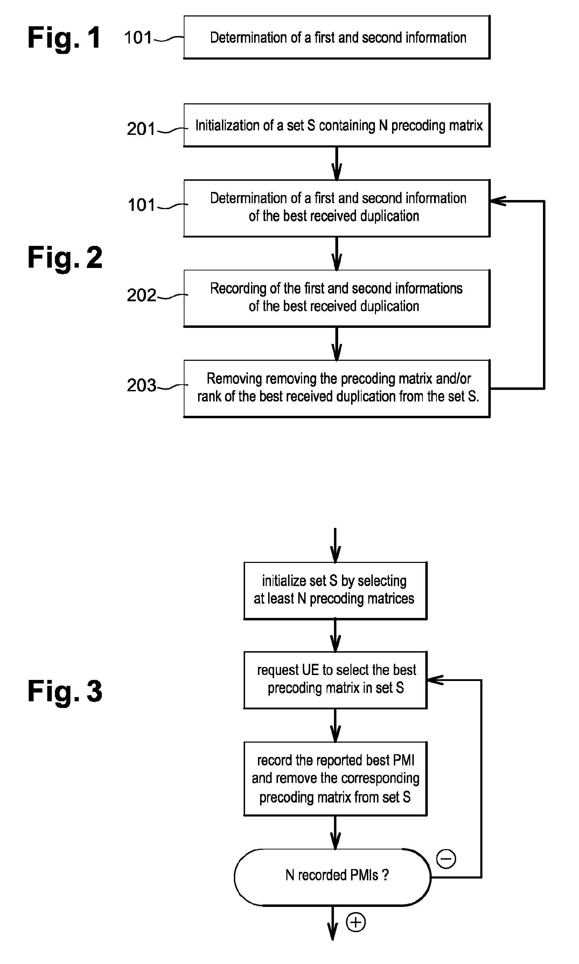

The figure 1 presents a first embodiment of a method to determine a RF fingerprint of a signal transmitted by a base station and received by a user equipment. The method comprises a step 101 of determining a first information representative of a power of the signal. Furthermore the first step 101 of determination is also configured to determine a second information representative of precoding preferences of the user equipment for a MIMO reception of the signal.

In an embodiment the first information is a RSSI, RSRP or RSRQ and the second information is a first indicator of a precoding matrix used to transmit the signal and/or an second indicator of the rank of a matrix representing the channel state information.

The RSSI, RSRP and RSRQ are described in http://4g-lte-world.blogspot.com/2015/05/rsrp-rssi-and-rsrq.html. The RSSI stands for Received Signal Strength Indicator, representing the total received wide-band power of reference symbols as measured by user. The RSRP means Received Signal Received Powers and corresponds to the linear average of the downlink reference signals across the channel bandwidth. The RSRQ indicates quality of received reference signal and is given by the formula shown below (N represents number of resource blocks)

$$RSRQ = \frac{RSRP}{RSSI} * N$$

In MIMO communication system we mean by rank the algebraic rank of a matrix representing the channel state information. In terms of its physical meaning, rank is the number of independent communication channels. The following web page presents terminology (MIMO, etc.) and a detailed explanation of the rank: http://www.sharetechnote.com/html/BasicProcedure_LTE_MIMO.html#Rank_Indicator_Conditi on_Number. When apply to an LTE network (Long Term Evolution, a 3GPP telecommunication network specification), the user equipment updates its serving base station on the rank of the current communication (MIMO transmission) by reporting the perceived rank of the communication channel in the form of a so-called RANK INDICATOR message, coincidently the second information.

Whenever the rank is equal to 1, the PMI (precoding matrix indicator) fingerprint information can be then interpreted in "geometrical" terms for example as user location angle.

In other words this embodiment idea is to diversify traditional fingerprints determination by adding new orthogonal information. This can for example help to reduce the fingerprint mapping ambiguity in the common case of incomplete/inaccurate/limited fingerprint measurements, i.e. improve localization accuracy. In particular, the present subject matter proposes to complement standard RSRP fingerprints by the information on user equipment precoding preferences for MIMO transmissions. UEs report feedback on precoding preferences to the serving base station as part of normal network operation, typically in the form of the precoding matrix indicator (PMI) and rank indicator (RI).

The usefulness of the PMI information for localization purposes is illustrated by the fact that under special circumstances such as the so-called MIMO Rank-1 communications (e.g., line of sight or poor scattering), PMI fingerprints can be used even on their own (i.e., without the RSRP fingerprint component) for high-resolution localization.

The figure 2 presents another embodiment of the method to determine a RF fingerprint of a signal. This signal is transmitted by a base station and received by a user equipment. This method comprises:

a step 201 of initializing a set S containing a plurality of different precoding preferences and
the method also comprising the following iterative steps
the first step 101 of determining the first and second information of the signal being configured to determine the second information among the different precoding preferences of the set S and this determined precoding preferences corresponds to the precoding preferences of the set S with which the user equipment receives the best the signal and
a step 202 of recording the determined first and second information and
a step 203 of removing the determined precoding preferences associated from the set S.

In other words the previous embodiment proposes a standard-compliant method for simple and practical collection of precoding fingerprints defined as PMI vectors sorted in order of user equipment precoding preference. The figure 3 proposes another illustration of the method if this embodiment.

In an embodiment of the present subject matter the iterative steps are realized until the set S is empty.

The determination of the precoding preferences of the set S with which the user equipment receives the best the signal or simply the pre-coding matrix index in the standardized LTE codebook is known on its own. For example, user equipment can measure the channel state information by using the standardized LTE pilot signal. The user equipment then checks which codeword in the set of codewords pre-defined by the base station would maximize a selected performance metric. This performance metric could be norm for example ($|HW|$) or Signal-to-Interference-plus-Noise Ratio (SINR) assuming the receiver is using a Minimum Mean Square Error (MMSE) filter. Whichever codeword maximizes this metric is transmitted as precodig matrix indicator and the corresponding codebook is transmitted as rank indicator. This is the general principle. For implementation details we can refer to the 3GPP standard especially du document TS 36.211-213.

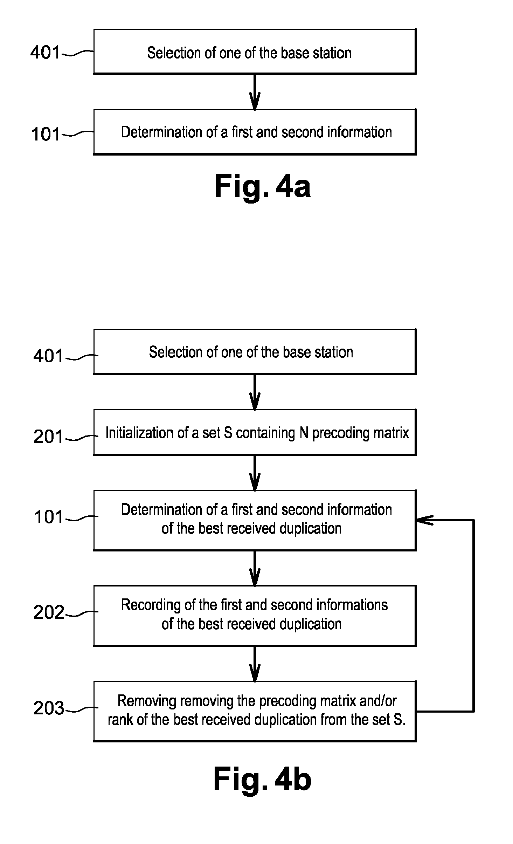

In another embodiment of the present subject matter, the user equipment is in the vicinity of a plurality of base stations and the method comprises a step 401 of selecting one of the base stations, this selected base station being the one with most diverse but coherent first and/or second information within an area around the estimated location of the user equipment or along an estimated user equipment mobility trajectory. This embodiment can be applied to the method of the figure 1 or the method of the figure 2, see respectively figures 4-a and 4-b.

In order to select the base station being the one with most diverse but coherent first and/or second information, we evaluate the PMI distribution in the monitored area for all candidate base stations.

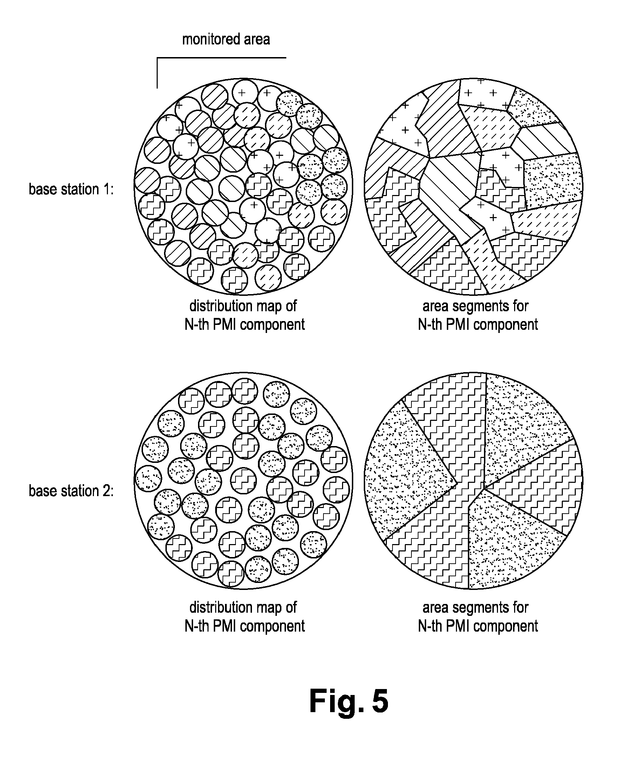

More specifically, so-called area segments are derived of each base station by (see figure 5)

•   generating a distribution map of the N-th component of the PMI fingerprints associated with a given base station (i.e., the N-th most preferred PMI of that base station) in the monitored area,
•   dividing the distribution map into contiguous segments, each characterized by a single dominant PMI type. For example, a PMI segment can be defined as the maximum contiguous area where the PMI of a given type represents at least X percent of all its PMIs. Required clustering methods are known.

The most suitable base station is then selected based on evaluating the size and frequency of the PMI segments in the monitored area. In the example of figure 5, base station 1 is characterized by relatively small segments of diverse type. On the other hand, base station 2 is associated only with two types of PMI segments of rather large dimensions. Hence selecting base station 1 for PMI reporting ensures higher resolution and reliability of user localization in view of smaller segment size and their overall uniqueness.

The user equipment initial location can be based on a rough location estimate. To this end, fingerprints from the strongest or randomly selected base stations can be used. For tracked user equipments, extrapolation techniques can be used to estimate their trajectory in the next few time intervals.

In an embodiment of the present subject matter, the step 401 of selecting one of the base stations is configured to select the base station that has its main antenna lobe most perpendicular to the estimated user equipment mobility trajectory.

In other words, this embodiment proposes a method for the selection of the "best" base stations for which PMI measurements contribute the most to the overall localization accuracy. Ideally, the localization-performing server within the operator's network should collect PMI fingerprints first from base stations are the ones with the most diverse but coherent PMI information within the estimated user equipment location area or along the estimated user equipment mobility trajectory.

In an embodiment of the present subject matter a telecommunication system is described. This telecommunication system comprises a user equipment and a base station. These user equipment and base station comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

In an embodiment of the telecommunication system, the base station is configured to transmit a signal and the user equipment is configured to receive this signal and determine a first information representative of a power of a signal received and a second information representative of precoding preferences of the user equipment for a MIMO transmission of the signal. This first information can for example be a RSSI, RSRP or RSRQ and the second information can for example be a first indicator of a precoding matrix used to transmit the signal and/or an second indicator of the rank of a matrix representing the channel state information.

In another embodiment of the telecommunication system, the base station transmits simultaneously a plurality of duplications of the signal, each duplication being associated with a different precoding matrix and/or a rank. The system also comprises an apparatus configured to initialize a set S containing N precoding matrix and/or ranks. The user equipment is also configured to determine one of the duplications of the signal which is best received by the user equipment and to determine determination the first and second information of the best received duplication of the signal. The apparatus is also configured, after the determination of the first and second information by the user equipment, to remove the precoding matrix and/or rank of the best received duplication from the set S. The user equipment will then make the determination of the best received duplication of the signal and the determination of the first and second information based on the reduced set S.

The apparatus could be implemented as an independent element of the telecommunication system, could be implemented within the base station or could be implemented within a localization server. The localization server is an entity that collects the PMI fingerprints from base stations and compares them with the geo-located fingerprint database to infer UE location - it can be one selected master base station for a given area, or a server somewhere in the operator network to which base stations can communicate fingerprints in exchange for localization information).

In another embodiment, of the telecommunication system, the user equipment is in the vicinity of a plurality of base stations and the apparatus is configured to select one of the base stations, this selected base station being the one with most diverse but coherent first and/or second information within an area around the estimated location of the user equipment or along an estimated user equipment mobility trajectory.

In another embodiment of the telecommunication system, the apparatus is a localization server and this localization server is configured to:

- evaluate the quality (diversity, coherence) of each base station using its database of geo-located fingerprints within the estimated user equipment location area,
- order the base stations to provide real-time fingerprint measurements in the order of their fingerprint quality

In another embodiment, this localization server is configured to order base stations to provide real-time fingerprint measurements depending on the spatial orientation of the user equipment trajectory and base station antenna pattern. For example, measurements are provided first by base stations whose antenna patterns are the closest to being perpendicular to the estimated user equipment trajectory.

In both previous embodiments, the localization server should also consider base station's strength and signal quality, indeed measurements cannot be provided by base station that has a too weak signal, although its fingerprint characteristics are very good otherwise.

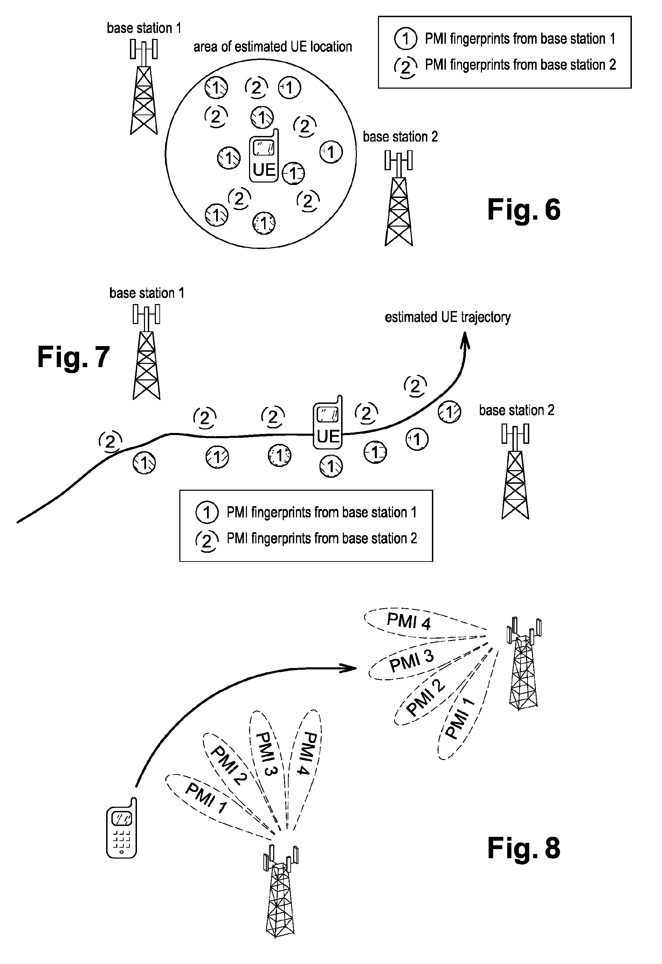

Figure 6 shows a visualization of the localization server fingerprint database. By using multiple different segment patterns of filling, it is indicated that base station 1 exhibits multiple different and unique geo-located fingerprints in the fingerprint database. On the other hand, base station 2 exhibits only fingerprints that are (more or less) identical (similar) - as shown by the use of only one filling pattern.

In this example, it is proposed that the localization server requests first measurements from the base station 1 with most diverse fingerprint information in the area as this base station can contribute most efficiently to more accurate user equipment localization. A similar procedure is used for tracking user equipment mobility trajectory as shown in figure 6.

If it is known what spatial beams individual PMIs create in each base station, the localization server can command for fingerprint collection first the base station that has its main antenna lobes perpendicular to the user equipment trajectory, this measure again ensure the most diverse PMI fingerprint collection as shown above. In the exemplary figure 8, the left-hand base station having the main antenna lobes perpendicular to the user equipment trajectory provides more diverse inputs on the best reported PMI as function of time (i.e., location of the mobile user equipment) - in contrary to the right-hand base station whose main antenna lobes are aligned to the user equipment trajectory.

In an embodiment of the present subject matter the user equipment and the base stations are using LTE specification. In this embodiment the signal sent by the base stations is also known as cell-specific reference signals (CRSs) and comprised of known sequences of reference symbols that are transmitted over fixed resource elements at a fixed transmit power, across the entire bandwidth and in all sub frames. The CRSs are tied to the physical cell identity (PCI) of the transmitting cell, and their periodic measurements are used for cell selection and handover procedures.

In this embodiment, each user equipment reports regularly or upon request to its serving cell or base station a measurement summary which indicates the CRS RSRPs of the serving cell and the neighboring cells. This measurement report is critical to trigger handovers and its submission is standardized by 3GPP. In this invention submission, such a user equipment measurement report is also referred to as user equipment RF fingerprint.

In another embodiment the different elements are using LTE CoMP transmission mode 10. This allows the configuration of three simultaneous reporting processes on four CSI-RS resources that can be associated with to up to one to four different base stations.

The present subject matter could be implemented using a so called codebook-based beam forming, for example the Table 6.3.4.2.3-2 from 3GPP standard TS 136 211 V10 (http://www.etsi.org/deliver/etsi_ts/136200_136299/136211/10.01.00_60/ts_136 211v100100p.p df). By beamforming is meant that the signal sent to the user equipment is multiplied (precoded) with complex weights that adjust the amplitude and phase of the signal in each radiating antenna element of the base station. Consequently, the antenna array effectively forms a transmit beam whose main lobe points in the direction specified by the precoding matrix. The beamforming/precoding matrix is selected such that the antenna main lobe points in the user equipment direction to provide for the best signal possible while causing minimum interference only.

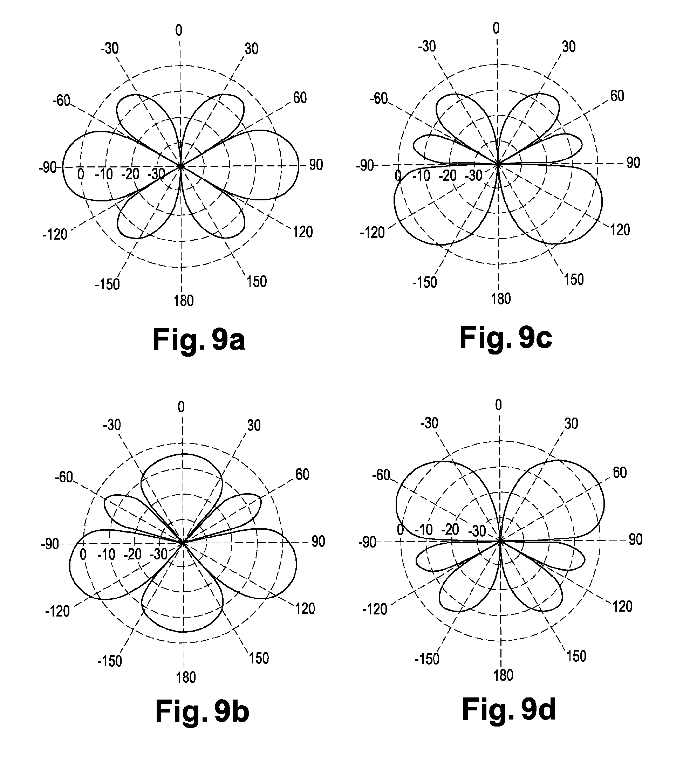

When using codebook-based beamforming, the set of predefined beamforming weight vectors is used by the base station in order to reduce the overhead of a user equipment reporting to the serving base station its precoding preferences. For example, in LTE, when the base station is using 4 antenna ports, 16 beamforming weight vector are available as summarized in the previously cited 3GPP standard. That corresponds to 16 antenna patterns; four of them are represented in figure. 9-a to 9-d. The user equipment then indicates its precoding preferences by reporting only a precoding matrix index (PMI).

Within the present subject matter, the RSRP fingerprints are complemented with the user equipment precoding preferences in order to improve the diversity and accuracy of the fingerprint database. This additional fingerprint information can consist of a single index of the most preferred precoding matrix from the standardized codebook that has been determined on the basis of wideband measurements. Preferably, however, a vector of PMIs sorted by the order of the preference.

Since each precoding matrix effectively corresponds to an antenna radiation pattern, by feeding back its PMI preferences, the user equipment implicitly provides a means for the algorithm to distinguish different RF fingerprints. This automatically takes into the account the multi-path and reflections in the environment. The LTE standard allows configuring a dedicated bitmap of the LTE downlink control information that is broadcast over the physical downlink control channel in order to specify the exact subset of precoding matrices to be evaluated by the user equipment. Moreover, the user equipment can be configured to report PMI for both the entire bandwidth and multiple pre-defined sub bands. Hence, in the most general example of the invention, the high-resolution information on sub band-measured PMIs is used to expand the fingerprint database to significantly enhance the RF fingerprint diversity.

As presented in the method of figures 2 and 3, to obtain a PMI vector of length *N* for a given (sub)band, the base station requests the user equipment to evaluate and report in *N* iterations the best precoding matrix from a set that:

- contains at least N selected precoding matrices in iteration 1, and
- from which the last reported best precoding matrix is removed in each following iteration to let the user equipment rank the remaining matrices.

The selected subset S of precoding matrices must be such that the main lobes of the corresponding antenna patterns have only a minimum mutual overlap (to minimize possible geo-location ambiguities), but their union covers the coverage sector of interest. An example of the set S is shown in figures 9-a to 9-d and corresponding respectively to PMI 3, 7, 4 and 1. Considering the antenna patterns shown in figures 9-a to 9-d, despite of the fact that they may appear to have low directivity gain, simulation results confirm that considering a ranked vector of PMIs can provide high level of angular differentiation. As shown in figure. 9, two vectors consisting of at most 12 PMIs are different if measured in locations being separated, on average, by 3 degrees of angular distance with respect to the serving base station (the absolute distance from the base station is theoretically irrelevant and is captured by the RF fingerprints). Another practical consideration is related to how the ranked PMI vector can be used to enhance the accuracy of the supervised learning predictor for geo-location application.

Essentially, a measure of similarity is required to determine a quantified distance between two PMIs. We have defined a so called Similarity Index ($\in[01]$) as the measure of likelihood of two antenna patterns defined as

$$S(n,m) = \frac{\int_{0}^{2\pi} \min\big(g(m,\theta), g(n,\theta)\big)\, d\theta}{\max\left(\int_{0}^{2\pi} g(m,\theta)\, d\theta\, , \int_{0}^{2\pi} g(n,\theta)\, d\theta\right)}$$

where $S(n, m)$ represents the similarity index (SI) between pattern n and m and $g(x,\theta)$ denotes the linear antenna gain of the $x^{th}$ pattern for a given radiation angle of $\theta$ in radian. This simple measure would capture the similarity for both the gain and the null angular regions of the two antenna patterns and can be computed offline according to the antenna patterns. Evidently the index of similarity is a symmetric function: $S(m,n)= S(n,m)$. Using this measure, one can predict similarity of inputs when considering the supervised learning task.

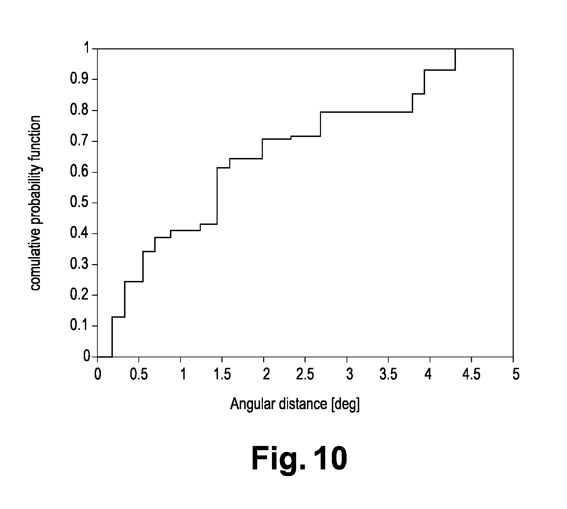

Figure 10 presents cumulative probability density function of the minimum angular distance between two locations characterized by different precoding preferences. Vectors of 12 precoding matrix indices are compared.

The present subject matter can be implemented in a standard compliant manner on the basis of pre-defined transmission modes of LTE that permit implicit or explicit feedback on user equipment precoding preferences. In either mode, while carrying out the algorithm from figures 2 and 3, the most preferred precoding is used for actual data transmissions, i.e. the precoding obtained for N=1.

Transmission mode 4 supports spatial multiplexing with up to four layers that are multiplexed to up to four antennas. To allow channel estimation at the receiver, the base station transmits cell-specific reference signals. The user equipment sends a response regarding the channel condition, which includes the PMI information.

Transmission mode 5 is similar to mode 4. It uses codebook-based closed-loop spatial multiplexing; however, one layer is dedicated for each user equipment.

Transmission mode 6 is a special type of closed-loop spatial multiplexing in mode 4. In contrast to mode 4, only one layer is used (rank-1). The user equipment estimates the channel and sends the index of the most suitable precoding matrix back to the base station. The base station sends the precoded signal via all antenna ports. The precoding in the baseband changes the magnitude and phase of the signals to different antennas and results in beamforming effect. With four transmit antennas; there are 16 different beamforming diagrams. This implicit beamforming effect is distinguished from classical beamforming used in transmission modes 7 and 8, that are aiming at achieving a direct impact on the antenna pattern, e.g., for covering particular areas of a cell.

Transmission mode 8 specifies dual-layer beamforming which allows the base station to weight two layers individually at the antennas so that beamforming can be combined with spatial multiplexing for one or more user equipments. As in mode 7, user equipment specific reference signals are used in this mode. Since the same resource elements are used, the reference signals must be coded differently so that the user equipment can distinguish between them. Because two layers are used, both layers can be assigned to one user equipment (SU-MIMO), or the two layers can be assigned to two separate user equipments (MU-MIMO).

Transmission mode 9 was introduced in Rel-10 and uses non-codebook-based precoding which supports up to eight layers using user equipment specific reference signals.

Transmission mode 10 was introduced in Rel-11 to enable CoMP transmissions and directly supports implicit PMI reporting.

Preferably, the PMI data are collected from base stations that form with the user equipment a line perpendicular to the user equipment trajectory. The motivation is that in case of rank 1 communications (which includes the case of dominant line-of-sight propagation), PMIs is highly correlated with the angular location of the user equipment with respect to the base station.

In other words, the present subject matter develops the most promising localization technique whose basis consists in the usage of RF fingerprints. Herein, the location of a user equipment can be efficiently estimated by comparing its reported received signal received powers (RSRP) from multiple base stations with a so-called RF fingerprint map or database that contains previously recorded geo-located RSRP measurements (so-called fingerprint vectors) from multiple base stations.

As a routine part of their operation (e.g., for handover decision making), user equipments periodically send to their serving base stations measurement reports on the received signal strength from the serving and neighboring base stations. Hence, collecting RF fingerprints from UEs does not require any additional or non-standard operations and overhead.

However, in practice, user equipments can provide RSRP measurements from a limited number of neighboring base stations due to limitations minimizing reporting overhead and time constraints of the measurement window. Incomplete and/or inaccurate RF fingerprints then result into ambiguous localization decisions, i.e. poor localization accuracy.

The task of geo-location using fingerprints can be thought of as a machine learning task where fingerprints presents a set of features that are used to derive an output that is the location of given user equipment with a given reported fingerprint. This invention proposes to enrich the training set by additionally including the PMI records and use these hybrid feature space to enhance the estimation accuracy. This can be done in several ways for example, when using the common KNN method, the training set can be first filtered out based on the PMI of the observation and then the nearest neighbors to be selected from the filtered list. The following section additionally shows few other example cases.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, described figure 1. This method is dedicated to the determination of a RF fingerprint of a signal. This signal is transmitted by a base station and received by a user equipment. The method comprises;

a step 101 of determining a first information representative of a power of the signal, and

the said step 101 of determination being also configured to determine a second information representative of precoding preferences of the user equipment for a MIMO reception of the signal.

In an embodiment a computer-readable medium having embedded thereon a computer program described in the previous section is proposed.

An embodiment of the subject matter is a computer program, configured to realize the method, described figure 2. This method is dedicated to determine a RF fingerprint of a signal. This signal is transmitted by a base station and received by a user equipment. The method comprises:

a step 201 of initializing a set S containing a plurality of different precoding preferences and

the method also comprising the following iterative steps

the first step 101 of determining the first and second information of the signal being configured to determine the second information among the different precoding preferences of the set S and this determined precoding preferences corresponds to the precoding preferences of the set S with which the user equipment receives the best the signal and

a step 202 of recording the determined first and second information and

a step 203 of removing the determined precoding preferences associated from the set S.

In an embodiment a computer-readable medium having embedded thereon a computer program described in the previous section is proposed.

One of the embodiments of the present subject matter concerns a user equipment. This user equipment comprises:

reception means and
one or more processor(s) and
a memory coupled to the processor(s);

The reception means are configured to receive a signal transmitted by a base station.

The processor is configured ;

- to determine a first information representative of a power of the signal, and
- to determine a second information representative of precoding preferences of the user equipment for a MIMO reception of the signal.

In another embodiment of the user equipment the first information is a RSSI or a RSRP or a RSRQ the second information is a first indicator of a precoding matrix used to transmit the signal and/or an second indicator of the rank of a matrix representing the channel state information.

In another embodiment of the user equipment the processor is also configured to initializing a set S containing a plurality of different precoding preferences and the processor being also configured:

to determine the second information among the different precoding preferences of the set S, this determined precoding preferences corresponds to the precoding preferences of the set S with which the user equipment receives the best the signal and

to record the determined first and second information and to remove the determined precoding preferences associated from the set S.

**Claims**

1. Method to determine a RF fingerprint of a signal transmitted by a base station and received by a user equipment, the method comprising;
   a step (101) of determining a first information representative of a power of the signal, and the said step (101) of determination being also configured to determine a second information representative of precoding preferences of the user equipment for a MIMO reception of the signal.

2. Method according to claim 1 wherein the first information is a RSSI or a RSRP or a RSRQ the second information is a first indicator of a precoding matrix used to transmit the signal and/or an second indicator of the rank of a matrix representing the channel state information.

3. Method according to claim 1 or 2 the method also comprising:

   a step (201) of initializing a set S containing a plurality of different precoding preferences and the method also comprising the following iterative steps
   the first step (101) of determining the first and second information of the signal being configured to determine the second information among the different precoding preferences of the set S and this determined precoding preferences corresponds to the precoding preferences of the set S with which the user equipment receives the best the signal and
   a step (202) of recording the determined first and second information and
   a step (203) of removing the determined precoding preferences associated from the set S.

4. Method according to claim 3 wherein the iterative steps are realized until the set S is empty.

5. Method according to any of the previous claims, wherein the user equipment is in the vicinity of a plurality of base stations and the method comprising a step (401) of selecting one of the base stations, this selected base station being the one with most diverse but coherent first and/or second information within an area around the estimated location of the user equipment or along an estimated user equipment mobility trajectory.

6. Method according to the claim 5 wherein the step 401 of selecting one of the base stations is configured to select the base station that has its main antenna lobe most perpendicular to the estimated user equipment mobility trajectory.

7. User equipment comprising;
   reception means and
   one or more processor(s) and
   a memory coupled to the processor(s);
   the reception means being configured to receive a signal transmitted by a base station and
   the processor being configured ;

   • to determine a first information representative of a power of the signal, and
   • to determine a second information representative of precoding preferences of the user equipment for a MIMO reception of the signal.

8. User equipment according to claim 7 wherein the first information is a RSSI or a RSRP or a RSRQ the second information is a first indicator of a precoding matrix used to transmit the signal and/or an second indicator of the rank of a matrix representing the channel state information.

9. User equipment according to claim 7 or 8 wherein the processor being also configured
   to initializing a set S containing a plurality of different precoding preferences and the processor being also configured:
   to determine the second information among the different precoding preferences of the set S, this determined precoding preferences corresponds to the precoding preferences of the set S with which the user equipment receives the best the signal and
   to record the determined first and second information and
   to remove the determined precoding preferences associated from the set S.

10. A computer-readable medium having embedded thereon a method to determine of a RF fingerprint of a signal transmitted by a base station and received by a user equipment the method comprising;
    a step (101) of determining a first information representative of a power of the signal, and the said step

(101) of determination being also configured to determine a second information representative of precoding preferences of the user equipment for a MIMO reception of the signal.

11. Computer-readable medium according to claim 10, the method also comprising

a step (201) of initializing a set S containing a plurality of different precoding preferences and

the method also comprising the following iterative steps

the first step (101) of determining the first and second information of the signal being configured to determine the second information among the different precoding preferences of the set S and this determined precoding preferences corresponds to the precoding preferences of the set S with which the user equipment receives the best the signal and

a step (202) of recording the determined first and second information and

a step (203) of removing the determined precoding preferences associated from the set S.

**Amended claims in accordance with Rule 137(2) EPC.**

1. Method to determine a RF fingerprint of a signal transmitted by a base station and received by a user equipment, the method comprising;

   a step (101) of determining a first information representative of a power of the signal, and the said step (101) of determination being also configured to determine a second information representative of precoding preferences of the user equipment for a MIMO reception of the signal;

   the said method also comprising:

   a step (201) of initializing a set S containing a plurality of different precoding preferences and

   the method also comprising the following iterative steps

   the first step (101) of determining the first and second information of the signal being configured to determine the second information among the different precoding preferences of the set S and this determined precoding preferences corresponds to the precoding preferences of the set S with which the user equipment receives the best the signal and

   a step (202) of recording the determined first and second information and

   a step (203) of removing the determined precoding preferences associated from the set S.

2. Method according to claim 1 wherein the first information is a RSSI or a RSRP or a RSRQ the second information is a first indicator of a precoding matrix used to transmit the signal and/or an second indicator of the rank of a matrix representing the channel state information.

3. Method according to any of the previous claims wherein the iterative steps are realized until the set S is empty.

4. Method according to any of the previous claims, wherein the user equipment is in the vicinity of a plurality of base stations and the method comprising a step (401) of selecting one of the base stations, this selected base station being the one with most diverse but coherent first and/or second information within an area around the estimated location of the user equipment or along an estimated user equipment mobility trajectory.

5. Method according to the claim 4 wherein the step 401 of selecting one of the base stations is configured to select the base station that has its main antenna lobe most perpendicular to the estimated user equipment mobility trajectory.

6. User equipment comprising;
   reception means and
   one or more processor(s) and
   a memory coupled to the processor(s);
   the reception means being configured to receive a signal transmitted by a base station and
   the processor being configured ;

   • to determine a first information representative of a power of the signal, and
   • to determine a second information representative of precoding preferences of the user equipment for a MIMO reception of the signal.

7. User equipment according to claim 6 wherein the first information is a RSSI or a RSRP or a RSRQ the second information is a first indicator of a precoding matrix used to transmit the signal and/or an second indicator of the rank of a matrix representing the channel state information.

8. User equipment according to claim 6 or 7 wherein the processor being also configured

   to initializing a set S containing a plurality of different precoding preferences and the processor being also configured:
   to determine the second information among the different precoding preferences of the set S, this determined precoding preferences corresponds to the precoding preferences of the set S with which the user equipment receives the best the signal and
to record the determined first and second information and
to remove the determined precoding preferences associated from the set *S*.

9. A computer-readable medium having embedded thereon a method to determine of a RF fingerprint of a signal transmitted by a base station and received by a user equipment the method comprising;

a step (101) of determining a first information representative of a power of the signal, and the said step (101) of determination being also configured to determine a second information representative of precoding preferences of the user equipment for a MIMO reception of the signal;

and the method also comprising
a step (201) of initializing a set *S* containing a plurality of different precoding preferences and
the method also comprising the following iterative steps
the first step (101) of determining the first and second information of the signal being configured to determine the second information among the different precoding preferences of the set *S* and this determined precoding preferences corresponds to the precoding preferences of the set *S* with which the user equipment receives the best the signal and
a step (202) of recording the determined first and second information and
a step (203) of removing the determined precoding preferences associated from the set *S*.

**Fig. 1**    101 — | Determination of a first and second information |

201 — | Initialization of a set S containing N precoding matrix |

**Fig. 2**

101 — | Determination of a first and second information of the best received duplication |

202 — | Recording of the first and second informations of the best received duplication |

203 — | Removing removing the precoding matrix and/or rank of the best received duplication from the set S. |

**Fig. 3**

| initialize set S by selecting at least N precoding matrices |

| request UE to select the best precoding matrix in set S |

| record the reported best PMI and remove the corresponding precoding matrix from set S |

N recorded PMIs ?   ⊖

⊕

401 — | Selection of one of the base station |

101 — | Determination of a first and second information |

# Fig. 4a

401 — | Selection of one of the base station |

201 — | Initialization of a set S containing N precoding matrix |

101 — | Determination of a first and second information of the best received duplication |

202 — | Recording of the first and second informations of the best received duplication |

203 — | Removing removing the precoding matrix and/or rank of the best received duplication from the set S. |

# Fig. 4b

monitored area

base station 1:

distribution map of
N-th PMI component

area segments for
N-th PMI component

base station 2:

distribution map of
N-th PMI component

area segments for
N-th PMI component

# Fig. 5

Fig. 6

Fig. 7

Fig. 8

**Fig. 9a**

**Fig. 9c**

**Fig. 9b**

**Fig. 9d**

**Fig. 10**

Europäisches
Patentamt

European
Patent Office

Office européen
des brevets

# EUROPEAN SEARCH REPORT

**Application Number**

EP 15 30 6413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/052875 A1 (KANGAS ARI [SE] ET AL) 1 March 2012 (2012-03-01) * paragraph [0001] - paragraph [0010] * * paragraph [0035] - paragraph [0036] * * paragraph [0054] - paragraph [0058]; figures 5A,5B,6 * * paragraph [0065] - paragraph [0069]; figure 8 * * paragraph [0071] - paragraph [0076]; figure 9 * * paragraph [0083] - paragraph [0084] * | 1-11 | INV. G01S5/02 H04W64/00 H04B17/318 H04B7/06 ADD. H04B7/04 |
| A | US 2011/039580 A1 (WIGREN TORBJOERN [SE] ET AL) 17 February 2011 (2011-02-17) * paragraph [0001] - paragraph [0009] * * paragraph [0035]; figure 1 * * paragraph [0049] * * paragraph [0055] * | 1-11 | |
| A | US 2012/258729 A1 (SIOMINA IANA [SE] ET AL) 11 October 2012 (2012-10-11) * paragraph [0002] * * paragraph [0008] - paragraph [0010] * * paragraph [0057]; figure 10 * * paragraph [0087] * | 1-11 | TECHNICAL FIELDS SEARCHED (IPC) G01S H04W H04B |
| A | WIGREN T: "Adaptive Enhanced Cell-ID Fingerprinting Localization by Clustering of Precise Position Measurements", IEEE TRANSACTIONS ON VEHICULAR TECHNOLOGY, IEEE SERVICE CENTER, PISCATAWAY, NJ, US, vol. 56, no. 5, 1 September 2007 (2007-09-01), pages 3199-3209, XP011192659, ISSN: 0018-9545, DOI: 10.1109/TVT.2007.900400 * abstract * * figures 6-9 * | 1-11 | |

The present search report has been drawn up for all claims

| Place of search | Date of completion of the search | Examiner |
|---|---|---|
| Munich | 23 February 2016 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6413

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2016

| Patent document cited in search report | | Publication date | Patent family member(s) | | Publication date |
|---|---|---|---|---|---|
| US 2012052875 | A1 | 01-03-2012 | EP | 2374310 A1 | 12-10-2011 |
| | | | JP | 5603878 B2 | 08-10-2014 |
| | | | JP | 2012512403 A | 31-05-2012 |
| | | | US | 2012052875 A1 | 01-03-2012 |
| | | | WO | 2010069610 A1 | 24-06-2010 |
| US 2011039580 | A1 | 17-02-2011 | CN | 102077613 A | 25-05-2011 |
| | | | EP | 2269391 A1 | 05-01-2011 |
| | | | US | 2011039580 A1 | 17-02-2011 |
| | | | WO | 2009131506 A1 | 29-10-2009 |
| US 2012258729 | A1 | 11-10-2012 | EP | 2664200 A1 | 20-11-2013 |
| | | | US | 2012258729 A1 | 11-10-2012 |
| | | | WO | 2012096607 A1 | 19-07-2012 |

EPO FORM P0459

For more details about this annex : see Official Journal of the European Patent Office, No. 12/82